# EUROPÄISCHE PATENTSCHRIFT

(11) **EP 1 862 651 B1**
(45) Veröffentlichungstag und Bekanntmachung des Hinweises auf die Patenterteilung: **09.11.2011**
(21) Anmeldenummer: 07010476.5
(22) Anmeldetag: 25.05.2007
(51) Int. Cl.: F01N 3/04, F16L 59/02

(54) **Isoliervorrichtung für ein, insbesondere von einem heißen Medium durchströmbares Maschinenelement**
Insulating device for a machine part, in particular one with a hot medium throughflow
Dispositif d'isolation pour un élément de machine pouvant s'écouler d'un milieu chaud en particulier

(30) Priorität: 29.05.2006 DE 202006008597 U
(43) Veröffentlichungstag der Anmeldung: 05.12.2007
(73) Patentinhaber: BDD Beteiligungs GmbH, 68169 Mannheim (DE)
(72) Erfinder: Schüle, Robert, 67245 Lambsheim (DE)
(74) Vertreter: Schmitt, Meinrad

(56) Entgegenhaltungen:
- DE-A1- 4 137 638
- DE-A1- 19 735 388
- DE-C1- 4 206 249
- US-A- 4 483 140

## Beschreibung

Die Erfindung bezieht sich auf ein Aggregat mit einer Isoliervorrichtung für ein insbesondere von einem heißen Medium durchströmbares Maschinenelement gemäß den im Oberbegriff des Anspruchs 1 angegebenen Merkmaien.

Aus der DE 197 35 388 A1 ist ein derartiges Aggregat mit einer als Abschirmelement bezeichneten Isoliervorrichtung bekannt- Die Isolienrorrichtung enthält als Außenmantel eine äußere erste Schale und als Wärmeleitkörper eine zweite innere Schale, zwischen welchen ein Rohrsystem angeordnet ist. Im Bereich des Rohrsystems ist eine direkte Verbindung des Wärmeleitkörpers mit dem Außenmantel nicht vorhanden. Der Außenmantel und der Wärmeleitkörper sind in ihren Randbereichen miteinander verbunden und bezüglich des als Abgasrohr ausgebildeten Maschinenelements festgelegt.

Ferner ist aus der DE 42 06 249 C1 eine Abgasleitung mit luftspaltisolierendem Gasführungskanal für eine Zylinderreihe einer Brennkraftmaschine bekannt. Der Gasführungskanal ist von einem doppelwandigem Gehäuse umgeben, welches Längskammern für Kühlwasser enthält.

Des Weiteren ist aus der US 4 483 140 A ein Abgasführungssystem einer Brennkraftmaschine bekannt, deren Abgasleitung von einer isolierenden Wand beabstandet umgeben ist. Diese Wand ist einteilig und zudem doppelwandig ausgebildet und sie enthält zum Einen Wasserkanäle und zum Anderen Verbindungsrippen, wobei die Wasserkanäle in geeigneter Weise mit dem Kühlwassersystem der Brennkraftmaschine verbunden sind.

Ferner ist eine Isoliervorrichtung aus der EP 1 134 478 B1 bekannt, wobei das Maschinenelement als ein Abgasrohr eines Motors ausgebildet ist und von dessen heißem Abgas durchströmbar ist. Diese Isoliervorrichtung enthält einen das Maschinenelement bzw. Abgasrohr umgebenden Mantel, welcher einen das Maschinenelement umgebenden Innenmantel sowie einen zu diesem beabstandet angeordneten Außenmantel aufweist, wobei in einem zwischen den beiden Mänteln vorhandenen Hohlraum Isoliermaterial austauschbar eingefüllt ist. Der Innenmantel und der Außenmantel sind derart flexibel ausgebildet, dass diese durch Aufspreizen ihrer Enden über das Maschinenelement bzw. das Abgasrohr geschoben werden können. Nachfolgend wird die Isoliervorrichtung mittels einer Befestigungsvorrichtung, welche beispielsweise ein oder mehrere Spannbänder enthält, unmittelbar auf dem Maschinenelement festgelegt, welches mit dem Motor bzw. Aggregat in bekannter Weise verbunden ist. Diese Isoliervorrichtung hat sich für viele Anwendungsfälle gut bewährt, doch es besteht für weitere Anwendungsfälle aufgrund besonderer Anforderungen ein erheblicher Bedarf nach einer verbesserten Ausbildung.

Weiterhin sind für Verbrennungsmotoren doppelwandig ausgebildete und wassergekühlte Abgaskrümmer aus Guss bekannt, welche einen erheblichen Fertigungsaufwand erfordern und ein hohes Gewicht aufweisen. Solche doppelwandigen Gusskrümmer stammen nicht aus der Serienfertigung, sondern sind aufwändige und teure Sonderanfertigungen, welche zudem einen großen Bauraum erfordern. Ferner ergeben sich Schwierigkeiten hinsichtlich der Genauigkeit und/oder Reproduzierbarkeit des Isolierverhaltens, zumal vor allem infolge von nicht erkennbaren Gussfehlern und/oder Verengungen der wasserführenden Kanäle und/oder deren Querschnittsminderung aufgrund von Ablagerungen schon nach vergleichsweise geringer Nutzungsdauer die errechnete bzw. theoretisch vorgegebene Wärmeabfuhr nicht sicher gestellt werden kann. Des Weiteren sind derartige wassergekühlte Gusskrümmer wartungsunfreundlich, zumal diese bei Durchführung von Wartungs- oder Reparaturmaßnahmen insgesamt vom Motor bzw. Aggregat zu demontieren oder gar vollständig auszutauschen sind. Es sei angemerkt, dass gemäß derzeitigem Serienstand, insbesondere bei kleineren Motoren, ein solcher Serienmotor aus dem Serienprogramm für PKW, LKW oder Omnibussen genommen und für besondere bzw. erhöhte Anforderungen umgebaut wird. Ein Umbau erfolgt in vielen Fällen dahingehend, dass die einwandigen Guss-Serienteile, beispielsweise Abgasrohr oder Abgaskrümmer, durch aufwändige, teure und schwere zweiwandige Gussteile ersetzt werden und diese an ein vorhandenes Wasserkühlsystem angeschlossen werden, um insbesondere eine gewünschte reduzierte Oberflächentemperatur zu erreichen.

Hiervon ausgehend liegt der Erfindung die Aufgabe zugrunde, die lsoliervorrichtung mit einem geringen konstruktiven Aufwand dahingehend weiterzubilden, dass die aufgezeigten Nachteile vermieden werden und ein verbesserter und/oder gezielter Abtransport der Wärme und/oder eine gleichmäßige Wärmeverteilung erreicht werden. Die Isoliervorrichtung soll einen geringen Fertigungs- und/oder Montageaufwand erfordern, wobei vor allem Eingriffe oder Änderungen des Aggregats und/oder des Maschinenelements vermieden oder aber zumindest auf ein Minimum reduziert werden sollen. Des Weiteren soll die Temperatur an der äußeren Oberfläche der lsollervorrichtung reduziert werden, damit insbesondere durch aus dem Aggregat austretenden Kraftstoff, wie insbesondere Dieselkraftstoff oder solchen enthaltende Dämpfe, kein Brand entstehen kann und das insoweit bestehende Gefährdungspotential mit hoher Sicherheit ausgeschlossen werden kann. Des Weiteren soll die für Kraftstoffmotoren auf See bzw. in Schiffen geltende SOLAS-Anforderung (safety of life at seas) eingehalten werden, welche u. a. fordert, dass kein Bauteil am Motor im Hinblick auf die Entzündlichkeit von Dieselkraftstoff wärmer als 220° C sein darf.

Die Lösung dieser Aufgabe erfolgt gemäß den Merkmalen des Patentanspruchs 1.

Die erfindungsgemäß vorgeschlagene Isoliervorrichtung zeichnet sich durch eine einfache und funktionssichere Konstruktion aus und kann ohne besonderen Aufwand und problemlos mit dem Maschinenelement, insbesondere einem Abgasrohr, und/oder dem Aggregat verbunden werden. Die lsoliervorrichtung enthält einen Außenmantel, insbesondere aus Blech, sowie ein mit diesem mittels eines Wärmeleitkörpers, mit einem Wärmeleitblech verbundenes und von einem Kühlmedium, insbesondere Wasser, durchströmtes Rohr, welches zweckmäßig als ein Kupferrohr ausgebildet ist. Es sei angemerkt, dass das Kühlmedium auch geeignete Zusätze, wie beispielsweise Frostschutzmittel, enthalten kann. Im Rahmen der Erfindung kann das Rohr als separates Bauteil ausgebildet sein oder unmittelbar in den Wärmeleitkörper integriert sein. Mittels des oder der Wärmeleitkörper mit Wärmeleitblechen , werden die Oberflächen des oder der Rohre oder Teilen derselben um ein Vielfaches vergrößert, wobei ferner auch zwischen den Rohren befindliche Abstandsflächen, welche nicht direkt an dem oder den Rohren anliegen, kühlen. Erfindungsgemäß wird somit mittels des durch das Rohr strömenden Mediums, insbesondere Wasser, das Rohr gekühlt, ferner der Wärmeleitkörper und über diesen der Außenmantel. Der Außenmantel kann mit geringem Fertigungsaufwand an die erforderliche Geometrie und/oder Außenkontur des Maschinenelements durch ein Verformungsverfahren angepaßt werden, und zwar insbesondere durch Abkanten oder Biegen. In bevorzugter Weise sind die Anlage- und/oder Verbindungsflächen des Wärmeleitblechs und des Außenmantels als ebene Flächen ausgebildet, wodurch zum einen eine einfache Herstellung und/oder Befestigung und/oder Verbindung des Wärmeleitblechs mit dem Außenmantel erreicht wird und zum anderen mit geringem Aufwand aufgrund der planen Ausbildung im Verbindungs- und/oder Anlagebereich in einfacher Weise ein guter Wärmeübergang sichergestellt wird.

Die Isoliervorrichtung ist problemlos an bestehenden Aggregaten bzw. Motoren nachrüstbar und/oder leicht in vorhandene Systeme zu integrieren und/oder mit einem vorhandenen Kühlsystem, insbesondere Wasserkühlung, zu verbinden. Die Isoliervorrichtung kann direkt oder indirekt, insbesondere über einen zwischengeschalteten Wärmetauscher, an das vorhandene Kühlsystem angeschlossen werden. Die erfindungsgemäße Isoliervorrichtung ermöglicht die Verwendung und/oder den Einsatz von Serienteilen aus dem PKW-, LKW- oder Bus-Serienprogramm, wodurch nicht unerhebliche Vorteile hinsichtlich des Fertigungs- und/oder Kostenaufwands erreicht werden. Vorhandene Maschinenelemente, wie Abgasrohre oder Abgaskrümmer oder Abgasturbolader, können unverändert beibehalten werden, so dass aufwändige Sonderanfertigungen, wie doppelwandige Abgasrohre oder Abgaskrümmer, vermieden werden. Zudem erfordert die Isoliervorrichtung im Vergleich mit doppelwandigen Ausführungen des Maschinenelements einen erheblich geringeren Bedarf an Material und/oder Gewicht und/oder Bauraum.

Die wassergekühlte oder von einem Kühlmedium durchströmte Isoliervorrichtung ist in bevorzugter Weise beabstandet zum Maschinenelement und/oder unter Bildung eines Freiraums zu diesem und/oder dem Aggregat angeordnet. Die Isoliervorrichtung ist erfindungsgemäß als Haube ausgebildet, welche das Maschinenelement mit vorgegebenem Abstand übergreift. Der Freiraum und/oder der Innenraum der Isoliervorrichtung sind erfindungsgemäß zum Außenraum hin geschlossen ausgebildet. Der im Inneren der Isolierverkleidung vorhandene Freiraum wird somit gekühlt und/oder auf einer im Vergleich zur Temperatur des Maschinenelements erheblich reduzierten Temperatur gehalten. Dies hat zur Folge, dass bei einer etwaigen Undichtigkeit des Außenmantels und/oder der Isoliervorrichtung zu heiße Luft nicht nach außen austreten kann. Im Vergleich mit der eingangs erwähnten Isoliervorrichtung gemäß der EP 1 134 478 B1, welche möglichst dicht ausgebildet sein muss, insbesondere durch überlappende Ausbildung der Bestandteile des Außenmantels, erfordert die erfindungsgemäße Isoliervorrichtung keinen besonderen Aufwand hinsichtlich der Dichtheit bzw. der Abdichtung zwischen dem Innenraum der Isoliervorrichtung und dem umgebenden Außenraum. Die vorgeschlagene lsoliervorrichtung ermöglicht den gezielten Abtransport der Wärme durch das das Rohr durchströmende Kühlmedium, insbesondere Wasser, anstelle der Kanalisation und/oder Speicherung der Wärme innerhalb der Isoliervorrichtung.

Weiterbildungen und besondere Ausgestaltungen der Erfindung sind in den Unteransprüchen sowie der nachfolgenden Beschreibung besonderer Ausführungsbeispiele angegeben. Es sei hier ausdrücklich festgehalten, dass die erfindungsgemäße Isoliervorrichtung nicht allein in Kombination mit Motoren oder Abgasrohren vorgesehen oder ausgebildet ist, sondern im Rahmen der Erfindung auch für beliebig ausgebildete Aggregate, wie Dampf- oder Gasturbinen, Abgasturbolader, Heißgasgebläse, Heizeinrichtungen und/oder denselben zugeordneten Maschinenelementen für heiße Medien, wie Dampf, heiße Verbrennungsluft oder ähnlich zum Einsatz gelangen kann.

Die Erfindung wird nachfolgend an Hand der in der Zeichnung dargestellten besonderen Ausführungsbeispiele näher erläutert, ohne dass insoweit eine Beschränkung erfolgt. Es zeigen in schematischen Darstellungen:
- Figur 1: teilweise einen Schnitt durch die Isoliervorrichtung mit Wärmeleitkörper und Rohr für das Kühlmedium,
- Figur 2: einen Querschnitt durch ein weiteres Ausführungsbeispiel,
- Figur 3: einen Schnitt quer zur Längsrichtung eines Abgasrohres und eine dieses umgebende Isoliervorrichtung,
- Figur 4, 5: eine seitliche Ansicht bzw. perspektivische Darstellung einer Isoliervorrichtung mit einem mäanderförmig ausgebildeten Rohr für das Kühlmedium.

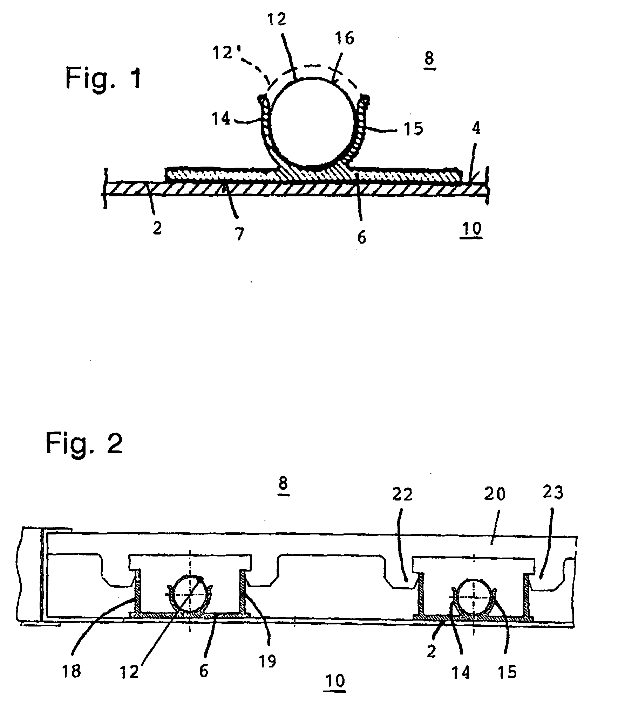

Fig. 1 zeigt teilweise die lsoliervorrichtung mit dem Außenmantel 2, der zweckmäßig aus einem Werkstoff guter Wärmeleitfähigkeit, insbesondere aus Metallblech, besteht. An der Innenfläche 4 des Außenmantels 2 ist der Wärmeleitkörper 6, welcher als Wärmeleitblech oder Wärmeaufnahmeprofil bzw. Wärmeleitprofil ausgebildet ist und nachfolgend auch als solche bezeichnet wird, angeordnet und in geeigneter Weise fest verbunden, insbesondere angeschweißt oder vernietet oder mittels Schrauben befestigt. Der Wärmeleitkörper bzw. das Wärmeleitblech 6 ist innerhalb eines von der Isoliervorrichtung umgebenen Innenraum 8 angeordnet, in welchem sich das von einem insbesondere heißen Medium durchströmbare und hier nicht dargestellte Maschinenelement, wie Abgasrohr oder Abgaskrümmer, befindet. Der Wärmeleitkörper 6 liegt mit seiner Anlagefläche 7, und zwar bevorzugt im wesentlichen in deren gesamten Größe, unmittelbar und/oder fest an der Innenfläche 4 des Außenmantels 2 an, wodurch vor allem ein optimaler Wärmeübergang vorgegeben ist. Der Innenraum 8 wird in der Regel nicht nur mittels der Isoliervorrichtung bzw. deren als Haube ausgebildeten Außenmantel 2 gegenüber dem umgebenden Außenraum 10 abgetrennt, sondern üblicherweise ferner von einem Teil des Aggregats, beispielsweise dem Zylinderkopf eines Verbrennungsmotors, mit welchem das Maschinenelement in bekannter Weise verbunden ist. Wie ersichtlich, ist mit dem Wärmeleitblech 6 ein Rohr 12 verbunden, welches von einem Kühlmedium durchströmbar ist und welches vorteilhaft aus einem Material mit guter Wärmeleitfähigkeit, wie insbesondere Kupfer, besteht. Das Rohr 12 ist mittels Befestigungselementen 14, 15 auf dem Wärmeleitblech 6 befestigt, wobei die Befestigungselemente 14, 15 in besonders vorteilhafter Weise einteilig mit dem Wärmeleitblech 6 ausgebildet sind. Wie dargestellt, umgreifen die Befestigungselemente 14, 15 des Wärmeleitblechs bügelförmig das Rohr 12 über einen vorgegebenen Umfangswinkel desselben, vorteilhaft über einen Umfangswinkel größer 180°. Die Befestigungselemente 14, 15 sind in zweckmäßiger Weise federelastisch derart ausgebildet, dass das Rohr 12 zwischen die Befestigungselemente 14, 15 nach Art einer Clipverbindung einsetzbar und/oder festgelegt ist. Die das Rohr 12 umgebende Innenfläche des Wärmeleitblechs 6 sowie der Befestigungselemente 14, 15 ist erfindungsgemäß an die Kontur der Außenfläche 16 des Rohres 12 angepaßt, so dass ein guter Wärmeübergang zwischen dem Wärmeleitblech 4 und dem Rohr 12 sichergestellt ist.

Ferner ist in Fig. 1 mit gestrichelter Linie ein alternatives Ausführungsbeispiel dargestellt, bei welchem das Rohr 12' in den Wärmeleitkörper 6 integriert ist, wobei das Rohr 12' als Hohlprofil ausgebildet ist. Wie ersichtlich, sind die Schenkel 14, 15 im Innenraum 8 verringert und miteinander zur Bildung des integrierten Rohrs 12' verbunden. Es sei ausdrücklich festgehalten, dass im Rahmen der Erfindung das Rohr 12' anstelle der dargestellten und im wesentlichen kreisringförmigen Querschnittsfläche eine andere Querschnittsfläche, wie oval, rechteckförmig oder ähnlich, aufweisen kann. Ferner sei darauf hingewiesen, dass unabhängig von der Ausgestaltung des Rohrs 12 bzw. 12', der Wärmeleitkörper 6 erfindungsgemäß mit der Anlagefläche 7 unmittelbar an der Innenfläche 4 des Außenmantels 2 direkt anliegt, und zwar bevorzugt zumindest näherungsweise in der gesamten Größe der Anlagefläche 7.

Fig. 2 zeigt teilweise ein weiteres Ausführungsbeispiel der Isoliervorrichtung mit dem Außenmantel 2, wobei hier zwei Wärmeleitbleche 6 dargestellt sind. Es sei angemerkt, dass die beiden Rohre 12 bzw. Rohrteile desselben ebenso wie die Wärmeleitbleche 6 orthogonal zur Zeichenebene angeordnet sind und sich in Längsrichtung vor sowie hinter die Zeichenebene erstrecken. Die Wärmeleitbleche 6 weisen an ihren seitlichen Enden in den Innenraum 8 ragende Schenkel 18, 19 auf und besitzen somit einen im Wesentlichen U-förmigen Querschnitt, wobei im Wesentlichen in der Mitte die bügelförmigen Befestigungselemente 14, 15 zur Fixierung des jeweiligen Rohres 12 bzw. Rohrteils vorgesehen sind. Das Wärmeleitblech 6 samt den Befestigungselementen 14, 15 sowie den Schenkeln 18, 19 erstreckt sich in Längsrichtung, somit orthogonal zur Zeichenebene, und ist in bevorzugter Weise als ein Profil aus einem gut wärmeleitfähigen Werkstoff, wie insbesondere Aluminium, ausgebildet, und wird nachfolgend somit auch als Wärmeaufnahmeprofil bezeichnet. Des Weiteren ist ein sich quer zur Längsrichtung der Wärmeleitbleche 6 erstreckendes und mit diesem teilweise in Eingriff stehendes Element 20 vorgesehen, welches in zweckmäßiger Weise als Abstandshalter bzw. Montagehilfe ausgebildet ist. Über die Längserstreckung der Wärmeleitbleche 6 können beabstandet mehrere derartige Elemente 20 vorgesehen sein. Das Element 20 enthält zum Außenmantel 2 gerichtete Schenkel 22, 23, welche mit den freien Enden der Schenkel 18, 19 des jeweiligen Wärmeleitblechs 6 in Eingriff stehen.

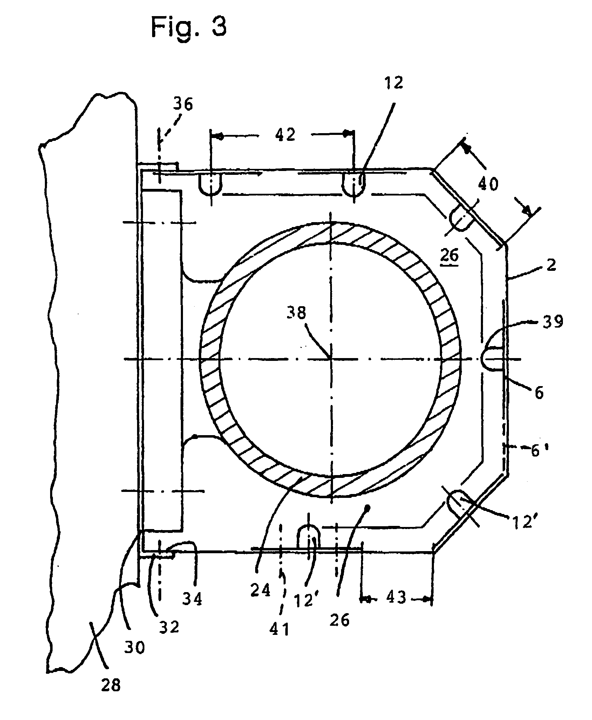

Fig. 3 zeigt die als Haube ausgebildete Isoliervorrichtung mit dem Außenmantel 2, welcher das Abgasrohr 24 beabstandet unter Bildung eines Freiraums 26 umgibt. Das Abgasrohr 24 ist in bekannter Weise mit einem teilweise dargestellten Zylinderkopf 28 eines Verbrennungsmotors verbunden. Als Befestigungsvorrichtung der lsoliervorrichtung ist ein Stützblech 30 vorgesehen, welches insbesondere zusammen mit dem Abgasrohr 24 am Zylinderkopf 28 befestigt ist. Die Befestigungsvorrichtung und/oder das Stützblech 30 weisen Winkelteile 32 auf, mit welchen die freien Enden 34 der Isoliervorrichtung und/oder deren Außenmantel 2 in bevorzugter Weise lösbar verbunden sind. Als Verbindungselemente können insbesondere Schrauben vorgesehen sein, wie mit strichpunktierten Linien 36 angedeutet. Alternativ können im Rahmen der Erfindung als lösbare Verbindungselemente Spannverschlüsse, Schnappverschlüsse, Spannelemente oder dergleichen zur unmittelbaren oder mittelbaren Festlegung der Isoliervorrichtung bezüglich dem Abgasrohr 24 und/oder dem Zylinderkopf 28 bzw. allgemein bezüglich dem Maschinenelement und/oder dem Aggregat vorgesehen sein. Ferner kann die Isoliervorrichtung direkt am Aggregat und/oder dem Maschinenelement befestigt sein, wobei die freien Enden der lsoliervorrichtung beispielsweise abgewinkelt sind und somit die Winkelteile der Befestigungsvorrichtung bilden, welche mittels Schrauben oder dergleichen unmittelbar mit dem Aggregat und/oder Maschinenelement bevorzugt lösbar verbunden sind. Die bevorzugt haubenförmige Isoliervorrichtung erstreckt sich ebenso wie das Abgasrohr in Längsrichtung orthogonal zur Zeichenebene und kann erfindungsgemäß in Längsrichtung aus mehreren Elementen oder Modulen, welche axial aneinander schließend angeordnet sind, aufgebaut sein. Bei Bedarf, beispielsweise zu Wartungszwecken, können die Isollervorrichtung und/oder einzelne Module derselben in einfacher Weise entfernt werden und anschließend mit dem Maschinenelement und/oder Aggregat wieder verbunden werden.

Die Wärmeleitkörper, Wärmeleitbleche bzw. Wärmeaufnahmeprofile 6 sind im Innenraum der Isoliervorrichtung bzw. im Freiraum 26 zwischen dem Außenmantel 2 und dem Abgasrohr 24 in Umfangsrichtung, und zwar bezogen auf die Längsachse 38, beabstandet zueinander angeordnet. Wie ersichtlich, besitzen die Wärmeleitbleche bzw. Wärmeaufnahmeprofile 6 in Umfangsrichtung eine vorgegebene Breite 40, wodurch auch in den Abstandsbereichen 42 zwischen benachbarten Rohren 12 eine gute Wärmeableitung erreicht wird. Die Abstände 42 zwischen benachbarten Rohren oder Rohrteilen 12 sind insbesondere größer als die Breite 40 der Wärmeleitbleche 6, sodass zwischen den Längskanten benachbarter Wärmeleitbleche 6 bevorzugt jeweils ein Abstandsbereich 43 vorhanden ist. Der Außenmantel 2 ist in bevorzugter Weise durch Abkanten oder Biegen eines ursprünglich ebenen Blechs in die erfindungsgemäße haubenförmige Form hergestellt. Wie aus der Zeichnung ersichtlich, schließen in Umfangsrichtung, und zwar bezogen auf die Längsachse 38, ebene Teilbereiche über abgewinkelte Bereiche aneinander an, wobei die Wärmeleitkörper 6 in bevorzugter Weise in den ebenen Teilbereichen angeordnet sind. Auch die Anlageflächen 7 der Wärmeleitkörper 6 sind eben ausgebildet, so dass ohne besonderen Aufwand eine optimierte flächige Anlage erreicht ist. Darüber hinaus sei festgehalten, dass die haubenförmige Isollervorrichtung bzw. deren Außenmantel erfindungsgemäß auch eine andere Querschnittsfläche aufweisen kann, wobei hier beispielshaft auf die Ausbildung als Halbschale mit zumindest näherungsweise zylindrischem oder ovalem Querschnitt verwiesen sei. In bevorzugter Weise ist der Außenmantel 2 einteilig ausgebildet, wobei im Rahmen der Erfindung Module der Isoliervorrichtung mit einteiligen Außenmänteln auch in Richtung der Längsachse hintereinander, zweckmäßig unmittelbar einander anschließend angeordnet sein können. Die einteilige Ausbildung bezieht sich auf die Umfangsrichtung der jeweiligen Halbschale, somit zwischen den freien Enden 34, welche mit dem Maschinenelement 24 und/oder dem Aggregat 28 verbunden sind.

Die Wärmeleitkörper 6 enthalten in den Innenraum 8 gerichtete Ausbuchtungen 39, welche entweder ein separates Rohr oder separate Rohrteile aufnehmen oder welche unmittelbar das Rohr 12 oder Teile desselben bilden. Im letztgenannten Fall ist der Wärmeleitkörper flüssigkeitsdicht und fest mit dem Außenmantel 2 verbunden, wie mit strichpunktierten Linien 41 angedeutet. Lediglich aus Gründen der besseren Erkennbarkeit sind die Wärmleitkörper 6 in einem kleinen Abstand zur Innenfläche des Außenmantels 2 dargestellt. Diese Verbindungen sind insbesondere als durchgehende Schweißnähte ausgebildet, welche sich über die gesamte Länge des derart hergestellten und/oder unmittelbar integrierten Rohres 12' erstrecken. Die genannten Ausbuchtungen 39 sind erfindungsgemäß durch entsprechende Verformung und/oder Prägung der Wärmeleitkörper 6 hergestellt. In einer alternativen besonderen Ausgestaltung sind wenigstens zwei der Wärmeleitkörper 6 zu einem einzigen Bauteil zusammengefaßt, wie mit der gestrichelten Linie 6' angedeutet. Ferner können erfindungsgemäß sämtliche integrierte Rohre oder Rohrteile 12' zu einem einzigen Bauteil im Innenraum 8 zusammengefaßt sein. Bei einer solchen Ausgestaltung wird insbesondere ein Blech zur Bildung der verschiedenen Ausbuchtungen 39 vor der Verbindung mit dem Außenmantel 2 verformt, und zwar insbesondere durch Prägung, wobei nachfolgend die Verbindungen 41 hergestellt werden. Es ist somit eine doppelwandige lsoliervorrichtung mit integrierten Rohren 12' oder Rohrteilen geschaffen.

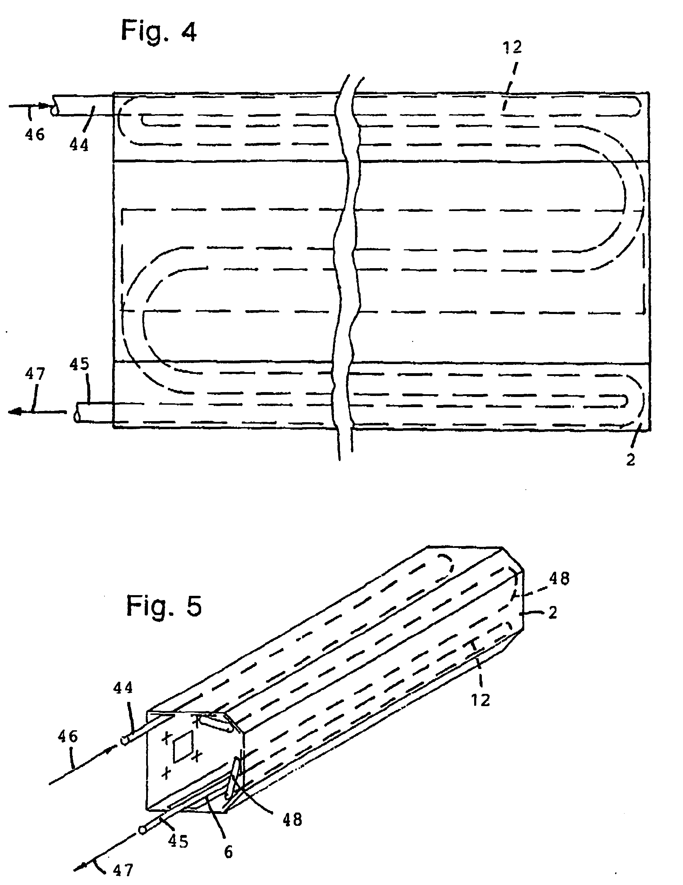

Fig. 4 bzw. 5 zeigen in seitlicher Ansicht bzw. perspektivisch die lsoliervorrichtung mit dem an der Innenfläche des Außenmantels 2 mäanderförmig angeordneten Rohr 12 für das Kühlmedium bzw. die Kühlflüssigkeit. Die Rohrenden 44, 45 sind mit hier nicht weiter dargestellten Anschlüssen an ein Kühlmittelsystem oder Kühlmittelkreislauf, beispielsweise eines Motors, angeschlossen, wobei mit den Pfeilen 46, 47 der Eintritt bzw. Austritt der Kühlflüssigkeit angedeutet ist. Die Rohrteile des Rohrs 12 verlaufen in axialer Richtung und/oder parallel zueinander und enthalten an den beiden axialen Enden des Außenmantels 2 Umlenkungsteile 48, welche bevorzugt über die genannten Enden des Außenmantels 2 nicht vorstehen, wobei das Rohr 12 insgesamt einteilig ausgebildet ist. Analog hierzu sind auch bei dem erläuterten doppelwandigen Ausführungsbeispiel die Umlenkungsbereiche innerhalb der gesamten Längserstreckung des Außenmantels bzw. der Isoliervorrichtung angeordnet. Des Weiteren können bei dem anhand von Fig. 1 erläuterten Ausführungsbeispiel die integrierten Rohrteile bzw. Hohlprofile an den jeweiligen axialen Enden der Wärmeleitprofile mit geeigneten separaten Urnlenkungsteilen flüssigkeitsdicht zwecks Herstellung einer durchgehenden Rohrleitung miteinander verbunden sein.

Es sei festgehalten, dass je nach Größe des Aggregats bzw. Motors eine vorgegebene Anzahl der erläuterten Isoliervorrichtungen bzw. Modulen derselben, insbesondere in axialer Richtung hintereinander angeordnet werden können. Des Weiteren können entsprechend der Konfiguration des Aggregats und/oder der Isoliervorrichtung oder deren Module das oder die Rohre anstelle der erläuterten mäanderförmigen Anordnung spiralförmig, zickzackförmig, oder ähnlich angeordnet sein. Maßgebend ist, die Anordnung und/oder Verbindung des oder der Rohre mit Wärmeleitblechen an der Innenfläche der Isoliervorrichtung, und zwar beabstandet zum Maschinenelement in dem Freiraum zwischen Maschinenelement und Außenmantel.

### Bezugszeichen

- 2: Außenmantel
- 4: Innenfläche von 2
- 6, 6': Wärmeleitkörper / Wärmeaufnahmeprofil
- 7: Anlagefläche von 6
- 8: Innenraum
- 10: Außenraum
- 12, 12': Rohr
- 14, 15: Befestigungselement
- 16: Außenfläche von 12
- 18, 19: Schenkel von 6
- 20: Element
- 22, 23: Schenkel von 20
- 24: Maschinenelement / Abgasrohr
- 26: Freiraum
- 28: Zylinderkopf
- 30: Stützblech
- 32: Winkelteil
- 34: freies Ende von 2
- 36: strichpunktierte Linie / Verbindungselement
- 38: Längsachse
- 39: Ausbuchtung
- 40: Breite von 6
- 41: strichpunktierte Linie
- 42: Abstand
- 43: Abstandsbereich
- 44, 45: Rohrende
- 46, 47: Pfeil
- 48: Umlenkungsteil von 12

## Patentansprüche

1. Aggregat mit einer Isoliervorrichtung für ein insbesondere von einem heißen Medium durchströmbares Maschinenelement (24), welches mit dem Aggregat (28) verbunden ist, wobei die Isoliervorrichtung einen Außenmantel (2) und wenigstens einen Wärmeleitkörper (6) enthält und das Maschinenelement (24) zumindest teilweise umgibt und bezüglich diesem oder dem Aggregat (28) festgelegt ist, und wobei ferner der Wärmeleitkörper (6) mit einem von einem Kühlmittel durchströmbaren Rohr (12) verbunden ist oder ein Rohr (12') enthält,
**dadurch gekennzeichnet, dass** der Wärmeleitkörper (6) als Wärmeaufnahmeprofil ausgebildet ist und ein Wärmeleitblech sowie einteilig mit diesem verbundene Befestlgungselemente (14, 15) aufweist, dass der Wärmeleitkörper (6) mit einer Anlagefläche (7) des Wärmeleitblechs unmittelbar an der Innenfläche (4) des Außenmantels (2) direkt anliegt und dass die Befestigungselemente (14, 15) das Rohr (12) oder Teile desselben bügelförmig umgreifen oder als miteinander verbundene Schenkel das integrierte Rohr (12') bilden.

2. Aggregat mir einer Isoliervorrichtung nach Anspruch 1, **dadurch gekennzeichnet, dass** der Außenmantel (2) beabstandet zum Maschinenelement (24) unter Bildung eines Freiraums (26) angeordnet ist und dass das Rohr (12, 12') in dem Freiraum (26) angeordnet ist oder dass die Isoliervorrichtung als Haube ausgebildet ist.

3. Aggregat mit einer Isoliervorrichtung nach Anspruch 1 oder 2, **dadurch gekennzeichnet, dass** das Rohr (12) mittels der Befestigungselemente (14, 15) nach Art einer Clipverbindung mit dem Wärmeleitkörper (6) verbunden ist.

4. Aggregat mit einer Isoliervorrichtung nach einem der Ansprüche 1 bis 3, **dadurch gekennzeichnet, dass** der Außenmantel (2) mit dem Maschinenelement (24) oder dem Aggregat (28) lösbar verbunden.

5. Aggregat mit einer Isoliervorrichtung nach einem der Ansprüche 1 bis 4, **dadurch gekennzeichnet, dass** der Außenmantel (2) einteilig ausgebildet ist.

6. Aggregat mit einer Isoliervorrichtung nach einem der Ansprüche 1 bis 5, **dadurch gekennzeichnet, dass** der Außenmantel (2) mittels einer Befestigungsvorrichtung, welche insbesondere ein Stützblech (30) enthält, mit dem Maschinenelement (24) oder dem Aggregat (28) lösbar verbunden ist.

7. Aggregat mit einer Isoliervorrichtung nach Anspruch 6, **dadurch gekennzeichnet, dass** die Befestigungsvorrichtung, insbesondere das Stützblech (30), wenigstens ein Winkelteil (32) aufweist, mit welchem wenigstens ein freies Ende des Außenmantels (2) mittels eines oder mehrerer Verbindungselemente (36) lösbar verbunden ist.

8. Aggregat mit einer Isoliervorrichtung nach Anspruch 6, **dadurch gekennzeichnet, dass** die Isoliervorrichtung direkt mit dem Aggregat (28) lösbar verbunden ist, wobei die Befestigungsvorrichtung bevorzugt Schrauben und/oder Verbindungselemente enthält, welche einerseits am Außenmantel (2) und andererseits am Aggregat (28) angreifen.

9. Aggregat mit einer Isoliervorrichtung nach einem der Ansprüche 1 bis 8, **dadurch gekennzeichnet, dass** an der Innenfläche (4) des Außenmantels (2) mehrere Wärmeleitkörper (6) beabstandet zueinander angeordnet sind.

10. Aggregat mit einer Isoliervorrichtung nach Anspruch 9, **dadurch gekennzeichnet, dass** die Wärmeleitkörper (6) eine vorgegebene Breite (40) aufweisen.

11. Aggregat mit einer Isoliervorrichtung nach Anspruch 9 oder 10, **dadurch gekennzeichnet, dass** zwischen den Längskanten benachbarter Wärmeleitkörper (6) ein vorgegebener Abstand (43) vorgesehen ist.

## Claims

1. Assembly with an insulation device for a machine element (24) through which in particular a hot medium can flow and which is connected to the assembly (28), wherein the insulation device contains an outer case (2) and at least one heat-conducting body (6) and surrounds the machine element (24) at least to some extent and is fixed with respect to the same or the assembly (28), and wherein further, the heat-conducting body (6) is connected to a pipe (12), through which a coolant can flow, or contains a pipe (12'),
**characterised in that** the heat-conducting body (6) is constructed as a heat absorbing profile and has a heat-conducting plate as well as fixing elements (14, 15) connected in one piece to the same, **in that** the heat-conducting body (6) bears by means of a bearing surface (7) of the heat-conducting plate directly against the inner surface (4) of the outer case (2) and **in that** the fixing elements (14, 15) encompass the pipe (12) or parts of the same in a clip-like manner or form the integrated pipe (12') as mutually connected sides.

2. Assembly with an insulation device according to Claim 1, **characterised in that** the outer case (2) is arranged spaced from the machine element (24) with the formation of a free space (26) and **in that** the pipe (12, 12') is arranged in the free space (26) or **in that** the insulation device is constructed as a cowl.

3. Assembly with an insulation device according to Claim 1 or 2, **characterised in that** the pipe (12) is connected by means of the fixing elements (14, 15) in the manner of a clip connection to the heat-conducting body (6).

4. Assembly with an insulation device according to any one of Claims 1 to 3, **characterised in that** the outer case (2) is releasably connected to the machine element (24) or the assembly (28).

5. Assembly with an insulation device according to any one of Claims 1 to 4, **characterised in that** the outer case (2) is constructed in one piece.

6. Assembly with an insulation device according to any one of Claims 1 to 5, **characterised in that** the outer case (2) is releasably connected to the machine element (24) or the assembly (28) by means of a fixing device which contains a support plate (30) in particular.

7. Assembly with an insulation device according to Claim 6, **characterised in that** the fixing device, particularly the support plate (30) has at least one angular part (32), to which at least one free end of the outer case (2) is releasably connected by means of one or a plurality of connection elements (36).

8. Assembly with an insulation device according to Claim 6, **characterised in that** the insulation device is releasably connected directly to the assembly (28), wherein the fixing device preferably contains screws and/or connection elements which act on the one hand on the outer case (2) and on the other hand on the assembly (28).

9. Assembly with an insulation device according to any one of Claims 1 to 8, **characterised in that** a plurality of heat-conducting bodies (6) are arranged spaced from one another on the inner surface (4) of the outer case (2).

10. Assembly with an insulation device according to Claim 9, **characterised in that** the heat-conducting bodies (6) have a predetermined width (40).

11. Assembly with an insulation device according to Claim 9 or 10, **characterised in that** a predetermined spacing (43) is provided between the longitudinal edges of adjacent heat-conducting bodies (6).

## Revendications

1. Ensemble avec un dispositif d'isolation pour un élément de machine (24) notamment irrigable par un fluide chaud, qui est relié au groupe (28), le dispositif d'isolation comprenant une enveloppe extérieure (2) et au moins un corps thermoconducteur (6) et entourant au moins en partie l'élément de machine (24) et étant fixé par rapport à ce dernier ou au groupe (28) et le corps thermoconducteur (6) étant relié par ailleurs avec un tube (12) irrigable par un agent réfrigérant ou contenant un tube (12'),
**caractérisé en ce que** le corps thermoconducteur (6) est conçu sous la forme d'un profilé absorbeur thermique et comportant une tôle thermoconductrice, ainsi que des éléments de fixation (14, 15) reliés en monobloc avec cette dernière, **en ce que** par une surface d'appui (7) de la tôle thermoconductrice, le corps thermoconducteur (6) s'appuie directement sur la surface intérieure (4) de l'enveloppe extérieure (2) et **en ce que** les éléments de fixation (14, 15) entourent le tube (12) ou des parties de ce dernier en forme d'étrier ou en tant que branche assemblées entre elles forment le tube (12') intégré.

2. Ensemble avec un dispositif d'isolation selon la revendication 1, **caractérisé en ce que** l'enveloppe extérieure (2) est disposé avec un écart par rapport à l'élément de machine (24) en formant un espace libre (26) et **en ce que** le tube (12, 12') est disposé dans l'espace libre (26) ou **en ce que** le dispositif d'isolation est conçu sous la forme d'un capot.

3. Ensemble avec un dispositif d'isolation selon l'a revendication 1 ou 2, **caractérisé en ce qu'**au moyen des éléments de fixation (14, 15) le tube (12) est relié au corps thermoconducteur (6) à la manière d'un assemblage par clip.

4. Ensemble avec un dispositif d'isolation selon l'une quelconque des revendications 1 à 3, **caractérisé en ce que** l'enveloppe extérieure (2) est assemblée de façon amovible avec l'élément de machine (24) ou avec l'ensemble (28).

5. Ensemble avec un dispositif d'isolation selon l'une quelconque des revendications 1 à 4, **caractérisé en ce que** l'enveloppe extérieure (2) est conçue en monobloc.

6. Ensemble avec un dispositif d'isolation selon l'une quelconque des revendications 1 à 5, **caractérisé en ce qu'**au moyen d'un dispositif de fixation, qui comprend notamment une tôle d'appui (30), l'enveloppe extérieure (2) est assemblée de façon amovible avec l'élément de machine (24) ou avec l'ensemble (28).

7. Ensemble avec un dispositif d'isolation selon la revendication 6, **caractérisé en ce que** le dispositif de fixation, notamment la tôle d'appui (30) comporte au moins une pièce en équerre (32) avec laquelle au moins une extrémité libre de l'enveloppe extérieure (2) est assemblée de façon amovible au moyen d'un ou de plusieurs éléments d'assemblage (36).

8. Ensemble avec un dispositif d'isolation selon la revendication 6, **caractérisé en ce que** le dispositif d'isolation est directement assemblé de façon amovible avec l'ensemble (28), le dispositif d'assemblage comprenant de préférence des vis et/ou des éléments d'assemblage qui s'engagent d'une part sur l'enveloppe extérieure (2) et d'autre part sur l'ensemble (28).

9. Ensemble avec un dispositif d'isolation selon l'une quelconque des revendications 1 à 8, **caractérisé en ce que** sur la surface intérieure (4) de l'enveloppe extérieure (2) plusieurs corps thermoconducteurs (6) sont disposés avec un écart mutuel.

10. Ensemble avec un dispositif d'isolation selon la revendication 9, **caractérisé en ce que** les corps thermoconducteurs (6) présentent une largeur (40) prédéfinie.

11. Groupe avec un dispositif d'isolation selon la revendication 9 ou 10, **caractérisé en ce qu'**entre les bords longitudinaux de corps thermoconducteurs (6) voisins est prévu un écart (43) prédéfini.
